# EUROPÄISCHE PATENTSCHRIFT

(11) **EP 3 233 603 B1**
(45) Veröffentlichungstag und Bekanntmachung des Hinweises auf die Patenterteilung: **19.06.2024**
(21) Anmeldenummer: 15816417.8
(22) Anmeldetag: 15.12.2015
(51) Int. Cl.: B60W 50/00, B60W 30/12, B60W 30/16

(54) **FAHRERASSISTENZEINRICHTUNG FÜR EINEN KRAFTWAGEN SOWIE VERFAHREN ZUM BETREIBEN EINER SOLCHEN**
DRIVER ASSISTANCE DEVICE FOR A MOTOR VEHICLE AND METHOD FOR OPERATING SUCH A DEVICE
DISPOSITIF D'ASSISTANCE À LA CONDUITE POUR VEHICULE AUTOMOBILE ET PROCÉDÉ DE FONCTIONNEMENT DE CELUI-CI

(30) Priorität: 17.12.2014 DE 102014018913
(43) Veröffentlichungstag der Anmeldung: 25.10.2017
(73) Patentinhaber: Valeo Schalter und Sensoren GmbH, 74321 Bietigheim-Bissingen (DE)
(72) Erfinder: MATHES, Joachim, 74321 Bietigheim-Bissingen (DE); MOSER, Martin, 70736 Fellbach (DE); VOVKUSHEVSKY, Vsevolod, 74321 Bietigheim-Bissingen (DE)
(86) Internationale Anmeldenummer: PCT/EP2015/079710
(87) Internationale Veröffentlichungsnummer: WO 2016/096798

(56) Entgegenhaltungen:
- DE-A1- 10 161 532
- DE-A1-102009 007 950
- DE-A1-102009 045 511
- DE-A1-102011 055 685

## Beschreibung

Die Erfindung betrifft ein Verfahren zum Betreiben einer Fahrerassistenzeinrichtung eines Kraftwagens. Sie betrifft ferner eine Fahrerassistenzeinrichtung für einen Kraftwagen gemäß dem Oberbegriff von Patentanspruch 8.

Es sind Fahrerassistenzeinrichtungen oder Fahrerassistenzsysteme bekannt, die einem Fahrer Fahraufgaben teilweise oder vollständig abnehmen. Dies kann beispielsweise bei einem Rangieren, wie einem Einparken, oder einem Fahren auf einer Autobahn der Fall sein. Diese Fahrerassistenzeinrichtungen sind für das Übernehmen derartiger Fahraufgaben darauf angewiesen, eine ausreichende Menge an Information über eine Umgebung des Fahrzeugs und die Fahrsituation zur Verfügung zu haben. Da diese Informationen nicht immer durch eine vorhandene Sensorik mit oftmals einer ganzen Reihe von Sensoreinrichtungen erfasst werden kann, gibt es Fahrerassistenzeinrichtungen, welche einen Lernmodus aufweisen. In einem solchen Lernmodus erfasst eine solche Fahrerassistenzeinrichtung Handlungen des Fahrers sowie eine Umgebung des Kraftwagens und erzeugt auf diese Art und Weise eine ausreichende Datenbasis für eine Automatisierung von Fahraufgaben. Da ein solcher Lernprozess eine verhältnismäßig lange Zeit in Anspruch nehmen kann, kommt es vor, dass die zugeordnete automatisierte Funktion über einen langen Zeitraum nicht beziehungsweise überhaupt nicht zur Verfügung steht.

So offenbart die DE 10 2011 107 974 A1 ein Verfahren zum Rangieren eines Fahrzeugs in einem Umfeld. Hierbei wird in einem Lernmodus das Fahrzeug von dem Fahrer in einem Referenzrangiervorgang gesteuert. Der Referenzrangiervorgang wird abgespeichert und nach dem Lernmodus von dem Fahrzeug in einem zumindest semiautonom durchzuführenden Wiederholrangieren in dem gleichen Umfeld berücksichtigt.

Die DE 10 2010 023 162 A1 beschreibt ein Verfahren zum Unterstützen eines Fahrers eines Kraftfahrzeugs beim Einparken in eine Parklücke mit Hilfe einer Fahrerassistenzeinrichtung. Dabei werden in einem Lernmodus der Fahrerassistenzeinrichtung Referenzdaten über einen Umgebungsbereich der Parklücke mit Hilfe einer Sensoreinrichtung erfasst und abgespeichert, während das Kraftfahrzeug durch den Fahrer gesteuert in die Parklücke eingeparkt wird. In einem nachfolgenden, von dem Lernmodus unterschiedlichen Betriebsmodus der Fahrerassistenzeinrichtung werden Sensordaten durch die Sensoreinrichtung erfasst und mit den Referenzdaten verglichen. Abhängig von diesem Vergleich wird der Umgebungsbereich der Parklücke anhand der erfassten Sensordaten erkannt und hierdurch eine aktuelle Position des Kraftfahrzeugs relativ zu einer im Lernmodus eingenommene Referenzposition des Kraftfahrzeugs bestimmt. Schließlich wird abhängig von der aktuellen Position des Kraftfahrzeugs relativ zur Referenzzielposition eine Parkbahn durch die Fahrerassistenzeinrichtung festgelegt, entlang welcher das Kraftfahrzeug aus der aktuellen Position in die Parklücke eingeparkt wird.

Die DE 10 2009 045 511 A1 zeigt eine Vorrichtung zum Erlernen einer Funktion einer Bedienhilfe eines Kraftfahrzeugs, die ausgebildet ist, von einem Ortungssystem eine gegenwärtige Ortsposition des Kraftfahrzeugs zu empfangen. Die Vorrichtung ist weiter ausgebildet, über eine Mensch-Maschine-Schnittstelle eine durch einen Benutzer ausgelöste erste Steueranweisung zu empfangen. Außerdem ist die Vorrichtung ausgebildet, eine Bedienhilfe zu aktivieren oder zu deaktivieren, falls die erste Steueranweisung bereits während einer festgelegten Anzahl von Fahrten des Kraftfahrzeugs jeweils in einem festgelegten Umkreis um die gegenwärtige Ortsposition ausgelöst wurde.

Die DE 101 61 532 A zeigt ein Verfahren zur fahrstreckenabhängigen Fahrzeugbeeinflussung, wobei eine Fahrstrecke individuell programmierbar ist, auf welcher eine vorgegebene Beeinflussung des Fahrzeugs stattfinden soll, wobei bei Wiederbefahren der programmierten Fahrstrecke die vorgegebene Fahrzeugbeeinflussung erfolgt.

Es ist Aufgabe der vorliegenden Erfindung, einem Fahrer eines Kraftwagens insbesondere in einer bekannten, also zuvor befahrenen Umgebung, möglichst schnell eine umgebungsabhängige Unterstützung durch eine Fahrerassistenzeinrichtung zur Verfügung zu stellen. Insbesondere soll die Unterstützung eine Fahrerpräferenz und/oder -gewohnheit berücksichtigen.

Diese Aufgabe wird durch die Gegenstände der beiden unabhängigen Patentansprüche gelöst. Vorteilhafte Ausführungsformen ergeben sich aus den abhängigen Patentansprüchen, der Beschreibung und den Figuren.

Ein erfindungsgemäßes Verfahren zum Betreiben eines Fahrerassistenzeinrichtung oder eines Fahrerassistenzsystems eines Kraftwagens umfasst eine Reihe von Schritten. Ein Schritt ist ein Erfassen einer Umgebung des Kraftwagens durch eine zur Fahrerassistenzeinrichtung gehörige Sensoreinrichtung des Kraftwagens. Des Weiteren ist auch ein Erfassen zumindest einer Handlung eines Fahrers des Kraftwagens, welche mit einer Fahrbewegung des Kraftwagens in Zusammenhang steht, durch eine zur Fahrerassistenzeinrichtung gehörige weitere Sensoreinrichtung des Kraftwagens Teil des Verfahrens. In einem weiteren Schritt erfolgt ein Erlernen einer Korrelation zwischen der erfassten Umgebung und der erfassten Handlung durch die Fahrerassistenzeinrichtung über ein wiederholtes Erfassen von der Umgebung und der Handlung. Das Erlernen kann also fortlaufend oder kontinuierlich erfolgen. Es erfolgt auch ein Bewerten einer Verlässlichkeit der erlernten Korrelation mittels eines Gütemaßes durch die Fahrerassistenzeinrichtung. Die Verlässlichkeit der erlernten Korrelation kann somit durch das Gütemaß quantifiziert werden. Das Gütemaß kann somit eine Konfidenz für die der Korrelation zu Grunde liegenden Daten beschreiben. Schließlich erfolgt ein Durchführen zumindest einer automatisierten Funktion, welche mit einer Fahrbewegung des Kraftwagens in Zusammenhang steht, durch die Fahrerassistenzeinrichtung in Abhängigkeit der augenblicklichen Umgebung des Kraftwagens und/oder eines Wertes des Gütemaßes. Es wird eine Einparkhandlung des Fahrers erfasst.

Das hat den Vorteil, dass die automatisierte Funktion, insbesondere ein Automatisierungsgrad der automatisierten Funktion, an die Qualität bzw. Verlässlichkeit der erlernten Korrelation anpassbar ist. Damit kann ein in einer mangelnden Verlässlichkeit der erlernten Korrelation begründetes Risiko der automatisierten Funktion ausgeschlossen werden und der Nutzen der automatisierten Funktion dem Fahrer des Kraftwagens schnellstmöglich zumindest graduell bereitgestellt werden. Es können so die bisher gesammelten Daten beziehungsweise die bisher erlernte Korrelation stets optimal zum Nutzen des Fahrers genutzt werden.

In einer bevorzugten Ausführungsform ist vorgesehen, dass durch das Gütemaß eine Häufigkeit des Erfassens der Umgebung und der Handlung und/oder eine Aktualität des Erfassens der Umgebung und der Handlung berücksichtigt ist. Dabei entspricht eine größere Häufigkeit und/oder eine größere Aktualität einem Gütemaß, welches eine größere Verlässlichkeit repräsentiert. Erfasste Daten bezüglich der Umgebung und der Handlung, und damit Korrelationen, die erst vor kurzem bestätigt wurden, beispielsweise am Vortag, haben entsprechend eine höhere Konfidenz oder eine größere Verlässlichkeit als Daten oder eine Korrelation, die über längere Zeit ohne Bestätigung geblieben sind. Auch wenn der Fahrer das Manöver oder die Handlung, welche mit einer Fahrbewegung des Kraftwagens in Zusammenhang steht, und welche der Korrelation zu Grunde liegt lange nicht durchführt, oder die aktuell erfasste Handlung von bisher erfassten Handlungen in einer bestimmten Umgebung erheblich abweichen kann die Verlässlichkeit der entsprechenden Korrelation herabgestuft werden. Über einen verwendeten Lernalgorithmus können auch erfasste Daten nach einer bestimmten Zeit für das Erlernen der Korrelation nicht mehr berücksichtigt werden oder erfasste Daten, welche nur einmal erfasst und danach nicht mehr bestätigt werden für eine erlernte Korrelation verworfen werden. Das hat den Vorteil, dass die Verlässlichkeit der erlernten Korrelation durch das Gütemaß besonders genau repräsentiert ist. Auch können so Änderungen in einer Verhaltensweise des Fahrers schnell ihren Niederschlag in dem Bewerten der Verlässlichkeit finden.

In einer besonders bevorzugten Ausführungsform ist vorgesehen, dass für das Durchführen der automatisierten Funktion ein Kategorisieren von der augenblicklichen Umgebung des Kraftwagens und/oder des Gütemaßes der gelernten Korrelation erfolgt, und zwar in diskrete Kategorisierungsstufen und die automatisierte Funktion je nach Kategorisierungsstufe unterschiedliche Teilfunktionen umfasst. Das hat den Vorteil, dass so einerseits schnell dem Fahrer die Funktionalität der entsprechenden Teilfunktionen der automatischen Funktion zur Verfügung gestellt werden kann und andererseits zugleich entsprechend Sicherheitspuffer in Form von Mindestvoraussetzungen an die Kategorisierungsstufe und damit die Verlässlichkeit der erlernten Korrelation für bestimmte vorgegebene Teilfunktionen realisiert sein können.

Dabei kann vorgesehen sein, in einer ersten Kategorisierungsstufe, welche insbesondere für eine erstmals erfasste Umgebung des Kraftwagens gewählt wird, die automatisierte Funktion als Teilfunktion lediglich zumindest eine ohne das Erlernen nutzbare Funktion der Fahrerassistenzeinrichtung umfasst, insbesondere ein Warnen eines Fahrers basierend auf einem aktuellen Erfassen der Umgebung. Das hat den Vorteil, dass die Fahrerassistenzeinrichtung in einer unbekannten Umgebung, in der naturgemäß keine Korrelation erlernt werden konnte, von einer gewöhnlichen Fahrerassistenzeinrichtung ohne die oben beschriebene Fähigkeit zum Erlernen einer Korrelation für den Fahrer nicht zu unterscheiden ist. Gleichzeitig findet das Erlernen einer Korrelation statt, so dass bei einem wiederholten Bewegen des Kraftwagens in dieser Umgebung die Fahrerassistenzeinrichtung eine verbesserte Unterstützung für den Fahrer bereitstellen kann.

Des Weiteren kann hier vorgesehen sein, dass in einer zweiten Kategorisierungsstufe, welche insbesondere für eine zuvor zumindest einmal erfasste Umgebung des Kraftwagens bei vorgegebenen ersten Werten des Gütemaßes gewählt wird, die automatisierte Funktion als Teilfunktion zumindest eine umgebungsspezifische Empfehlung an den Fahrer ausgibt. Bei dieser Empfehlung kann es sich insbesondere um ein von der Fahrerassistenzeinrichtung an ein Lenkrad des Kraftwagens angelegtes Lenkmoment und/oder ein optisches oder haptisches Empfehlen eines Lenkwinkels und/oder ein optisches oder haptisches Empfehlen einer Gasstellung und/oder ein optisches oder haptisches Empfehlen einer Kupplungsstellung und/oder ein optisches oder haptisches Empfehlen einer Gangwahl handeln. Insbesondere repräsentieren die vorgegebenen ersten Werte des Gütemaßes hier eine geringe Verlässlichkeit oder Konfidenz. Das hat den Vorteil, dass der Fahrer sehr schnell, nach einem kurzen Lernprozess, bereits von den erlernten Korrelationen profitieren kann, dabei jedoch eine möglicherweise geringe Verlässlichkeit der erlernten Korrelationen und damit eine möglicherweise unpassende oder falsche Interpretation einer Situation durch die Fahrerassistenzeinrichtung keine Gefährdung nach sich zieht, da der Fahrer lediglich eine Empfehlung erhält. Das Fahrzeug ist hier noch durch den Fahrer geführt und entsprechend sicher.

Des Weiteren kann hier vorgesehen sein, dass in einer dritten Kategorisierungsstufe, welche insbesondere für eine zuvor zumindest einmal erfasste Umgebung des Kraftwagens bei vorgegebenen zweiten Werten des Gütemaßes gewählt wird, die automatisierte Funktion als Teilfunktion zumindest ein teilautonomes Führen des Kraftwagens durch die Fahrerassistenzeinrichtung unter unmittelbarer Überwachung des Fahrers umfasst, also beispielsweise wenn dieser im Kraftwagen sitzt. Die unmittelbare Überwachung kann zum Beispiel sichergestellt werden, indem während des teilautonomen Führens der Fahrer seine Hände nicht vom Lenkrad nehmen darf beziehungsweise ein Entfernen der Hände vom Lenkrad ein Unterbrechen des teilautonomen Führens des Kraftwagens zur Folge hat. Insbesondere umfasst die Teilfunktion ein teilautonomes Querführen und/oder ein teilautonomes Längsführen des Kraftwagens durch die Fahrerassistenzeinrichtung. Die vorgegebenen zweiten Werte des Gütemaßes können hier eine hohe Konfidenz oder eine große Verlässlichkeit der Korrelation repräsentieren. Bevorzugt liegen hier die vorgegebenen zweiten Werte des Gütemaßes über für die zweite Kategorisierungsstufe vorgegebenen ersten Werten. Das hat den Vorteil, dass der Fahrer wieder schnell von den erlernten Korrelationen profitieren kann, dabei aber zugleich die Sicherheit nicht gefährdet ist, da der Fahrer die Teilfunktion überwacht.

Schließlich kann hier vorgesehen sein, dass in einer vierten Kategorisierungsstufe, welche insbesondere für eine zuvor zumindest einmal erfasste Umgebung des Kraftwagens bei vorgegebenen dritten Werten des Gütemaßes gewählt wird, die automatisierte Funktion als Teilfunktion zumindest ein autonomes Führen des Kraftwagens durch die Fahrerassistenzeinrichtung ohne unmittelbare Überwachung des Fahrers umfasst. Insbesondere kann die Teilfunktion ein autonomes Querführen und/oder ein autonomes Längsführen des Kraftwagens durch die Fahrerassistenzeinrichtung und/oder ein autonomes Ein- beziehungsweise Ausparken des Kraftwagens umfassen. Der Fahrer kann hier den Kraftwagen verlassen. Die dritten Werte des Gütemaßes repräsentieren hier eine sehr hohe Konfidenz oder eine sehr große Verlässlichkeit der Korrelation. Bevorzugt übertreffen die vorgegebenen dritten Werte des Gütemaßes die vorgegebenen zweiten Werte. Das hat den Vorteil, dass der Fahrer so die volle, umgebungsspezifische Unterstützung durch die Fahrerassistenzeinrichtung erhält.

Besonders bevorzugt ist hier eine Ausführungsform in welcher die genannten vier Kategorisierungsstufen gemeinsam realisiert sind.

Das Erlernen der Korrelationen findet hier insbesondere in jeder der genannten Kategorisierungsstufen weiterhin statt.

Die Erfindung betrifft auch eine Fahrerassistenzeinrichtung für einen Kraftwagen, mit einer Sensoreinrichtung zum Erfassen einer Umgebung des Kraftwagens und mit einer weiteren Sensoreinrichtung zum Erfassen zumindest einer Handlung eines Fahrers des Kraftwagens, welche mit einer Fahrbewegung des Kraftwagens in Zusammenhang steht.

Wesentlich ist hier, dass die Fahrerassistenzeinrichtung auch eine Lerneinheit zum Erlernen einer Korrelation zwischen der erfassten Umgebung und der erfassten Handlung umfasst. Dieses Erlernen erfolgt über ein wiederholtes Erfassen von der Umgebung, also der jeweils gleichen Umgebung, und der in dieser gleichen Umgebung erfassten Handlung des Fahrers. Dabei ist mittels einer Bewertungseinrichtung der Fahrerassistenzeinrichtung eine Verlässlichkeit der erlernten Korrelation mittels eines Gütemaßes bewertbar. Auch ist mittels der Fahrerassistenzeinrichtung zumindest eine automatisierte Funktion, welche mit einer Fahrbewegung des Kraftwagens in Zusammenhang steht, in Abhängigkeit der augenblicklichen Umgebung des Kraftwagens und/oder eines Wertes des Gütemaßes durchführbar. Die automatisierte Funktion kann auch stets in Abhängigkeit von der augenblicklichen Umgebung und zusätzlich optional von einem Wert des Gütemaßes abhängig sein. Die Fahrerassistenzeinrichtung ist ausgelegt, eine Einparkhandlung zu erfassen. Vorteile und vorteilhafte Ausführungsformen entsprechen hier den Vorteilen und vorteilhaften Ausführungsformen des entsprechenden Verfahrens.

Weitere Vorteile, Merkmale und Einzelheiten der Erfindung ergeben sich aus der nachfolgenden Beschreibung bevorzugter Ausführungsbeispiele.

In einer ersten beispielhaften Ausführungsform des Verfahrens wird das Erlernen durch die Fahrerassistenzeinrichtung dann durchgeführt, wenn sich der Kraftwagen in der Nähe eines favorisierten Parkplatzes befindet, beispielsweise in der Nähe eines Parkplatzes zu Hause oder in der Nähe eines Parkplatzes bei einer Arbeitsstätte. Die Fahrerassistenzeinrichtung erfasst hier dann die jeweilige Umgebung sowie die von einem Fahrer durchgeführten Einparkhandlungen. Mit einer steigenden Anzahl von erfassten Einparkhandlungen sowie einem wiederholten Erfassen der Umgebung des entsprechenden Parkplatzes können stationäre und mobile Hindernisse unterschieden werden. Auch kann die Fahrerassistenzeinrichtung erlernen, welchen Teil eines Freiraums des entsprechenden Parkplatzes der Fahrer bei dem Einparken wirklich nutzt und welche Zielposition des Kraftwagens von dem Fahrer favorisiert wird.

In diesem Beispiel erfolgt für das Durchführen einer automatisierten Funktion, welche mit einer Fahrbewegung des Kraftwagens in Zusammenhang steht, ein Kategorisieren der erfassten Daten, also der erfassten Umgebung und einer erfassten Handlung des Fahrers in vier diskrete Kategorisierungsstufen, welche jeweils eines automatisierte Funktion mit einem unterschiedlichen Funktionsumfang nach sich ziehen.

In der ersten Kategorisierungsstufe, vorliegend in einer unbekannten Umgebung, welche zum ersten Mal erfasst wird, generiert die Fahrerassistenzeinrichtung zum Beispiel Warnungen auf Basis der Sensordaten, also auf Basis der erfassten Umgebung, wie sie von einer gewöhnlichen Einparkhilfe bekannt sind. In einer zweiten Kategorisierungsstufe, welche erreicht wird, wenn die Umgebung bekannt ist, also zuvor bereits erfasst wurde, jedoch nur wenige oder stark unterschiedliche Handlungen des Fahrers in dieser Umgebung erfasst wurden, so dass eine erlernte Korrelation zwischen der Umgebung und einer Fahrerhandlung eine kleine Verlässlichkeit oder eine geringe Konfidenz aufweist, empfiehlt die Fahrerassistenzeinrichtung dem Fahrer vorliegend eine günstige Trajektorie für den Ein- oder Ausparkvorgang. Hier kann die Fahrerassistenzeinrichtung beispielsweise ein zusätzliches Lenkmoment auf ein Lenkrad des Kraftwagens beaufschlagen und/oder eine Geschwindigkeit des Kraftwagens reduzieren. In einer dritten Kategorisierungsstufe, in welcher die augenblickliche Umgebung bereist mehrfach erfasst wurde und die dort erlernte Korrelation zwischen Umgebung und Handlung eines Fahrers eine hohe Konfidenz oder große Verlässlichkeit aufweist, bietet die Fahrerassistenzeinrichtung dem Fahrer hier einen vollautomatisierten Einparkvorgang an, der durch den Fahrer überwacht werden muss. Dieses Überwachen kann beispielsweise durch Betätigen eines Totmannschalters erfolgen. Die vierte Kategorisierungsstufe, in welcher für eine bekannte Umgebung eine Korrelation mit einer sehr hohen Konfidenz oder einer sehr großen Verlässlichkeit erlernt wurde, kann die Fahrerassistenzeinrichtung den Kraftwagen in diesem Beispiel vollautomatisch einparken, ohne dass der Fahrer den Vorgang überwachen muss oder ohne dass der Fahrer sich im Kraftwagen befinden muss.

In einer nicht zur Erfindung gehörenden Ausführungsform des Verfahrens zum Betreiben einer Fahrerassistenzeinrichtung eines Kraftwagens kann ein Fahren auf ausgebauten Straßen automatisiert werden. Hier aktiviert beispielsweise der Fahrer einen Lernmodus, also das Erlernen durch die Fahrerassistenzeinrichtung, nachdem er sein Fahrzeug auf eine bevorzugte Strecke geführt hat. Der Lernmodus kann auch automatisch aktiviert werden. Bei dem Erlernen sammelt die Fahrerassistenzeinrichtung durch das Erfassen der Umgebung und der Handlungen des Fahrers Informationen über den Straßenabschnitt und die Fahrweise des Fahrers. Diese Informationen können auch mit Navigationsdaten abgeglichen werden. Über das Erlernen wird so eine Korrelation über den Straßenabschnitt und die Fahrweise des Fahrers erlernt. Je öfter dieses Erlernen durchgeführt wird, also je mehr Lernvorgänge absolviert werden, desto größer ist vorliegend der Wert des Gütemaßes für die Verlässlichkeit der erlernten Korrelation. Entsprechend kann für eine größere Verlässlichkeit auch eine höhere Automatisierungsstufe für den Fahrer durch die Fahrerassistenzeinrichtung angeboten werden.

Im vorliegenden Beispiel können die vier Kategorisierungsstufen, wie sie aus dem oben angeführten Beispiel bekannt sind, an beispielsweise die gleichen grundsätzlichen Voraussetzungen in Bezug auf einen Bekanntheitsgrad der Umgebung und eine Verlässlichkeit der Korrelationen geknüpft sein, jedoch andere automatisierte Teilfunktionen der automatisierten Funktion umfassen. So kann durch die Fahrerassistenzeinrichtung bei einer unbekannten Umgebung in der ersten Kategorisierungsstufe z.B. eine Warnung ausgegeben werden, wenn der Kraftwagen eine Spur verlässt, sich ein Hindernis in einem toten Winkel aufhält, oder dergleichen mehr, wie es von den Fahrerassistenzeinrichtungen im Stand der Technik bekannt ist. In der zweiten Kategorisierungsstufe in einer bekannten Umgebung mit einer Korrelation geringer Verlässlichkeit kann beispielsweise durch die Fahrerassistenzeinrichtung eine Lenk- oder Gasempfehlung erfolgen, wobei der Fahrer nach wie vor den Kraftwagen steuert. In der dritten Kategorisierungsstufe in einer bekannten Umgebung mit einer Korrelation hoher Verlässlichkeit kann hier ein automatisiertes Fahren des Kraftwagens durch die Fahrerassistenzeinrichtung erfolgen, wobei der Fahrer den Vorgang beispielsweise über am Lenkrad verbleibende Hände überwacht. In der vierten Kategorisierungsstufe, im Falle einer bekannten Umgebung mit einer sehr großen Verlässlichkeit der erlernten Korrelation, kann die Fahrerassistenzeinrichtung vorliegend ein vollautomatisiertes Fahren anbieten. In diesem Fall muss der Fahrer den Vorgang nicht überwachen und kann beispielsweise stattdessen Arbeiten, Zeitung lesen oder sich anderweitig beschäftigen.

## Patentansprüche

1. Verfahren zum Betreiben einer Fahrerassistenzeinrichtung eines Kraftwagens, mit den Schritten:
- Erfassen einer Umgebung des Kraftwagens durch eine zur Fahrerassistenzeinrichtung gehörige Sensoreinrichtung des Kraftwagens;
- Erfassen zumindest einer Handlung eines Fahrers des Kraftwagens, welche mit einer Fahrbewegung des Kraftwagens in Zusammenhang steht, durch eine zur Fahrerassistenzeinrichtung gehörige weitere Sensoreinrichtung des Kraftwagens;
- Erlernen einer Korrelation zwischen der erfassten Umgebung und der erfassten Handlung durch die Fahrerassistenzeinrichtung über ein wiederholtes Erfassen von der Umgebung und der Handlung;
- Bewerten einer Verlässlichkeit der erlernten Korrelation mittels eines Gütemaßes durch die Fahrerassistenzeinrichtung;
- Durchführen zumindest einer automatisierten Funktion, welche mit einer Fahrbewegung des Kraftwagens in Zusammenhang steht, durch die Fahrerassistenzeinrichtung in Abhängigkeit der augenblicklichen Umgebung des Kraftwagens und/oder eines Wertes des Gütemaßes, **gekennzeichnet durch** Erfassen einer Einparkhandlung des Fahrers.

2. Verfahren nach Anspruch 1,
**dadurch gekennzeichnet, dass**
durch das Gütemaß eine Häufigkeit des Erfassens der Umgebung und der Handlung und/oder eine Aktualität des Erfassens der Umgebung und der Handlung berücksichtigt ist und eine größere Häufigkeit und/oder eine größere Aktualität einem Gütemaß entspricht, welches eine größere Verlässlichkeit repräsentiert.

3. Verfahren nach einem der vorhergehenden Ansprüche,
**dadurch gekennzeichnet, dass**
für das Durchführen der automatisierten Funktion ein Kategorisieren von der augenblicklichen Umgebung des Kraftwagens und/oder des Gütemaßes der gelernten Korrelation erfolgt, und zwar in diskrete Kategorisierungsstufen, und die automatisierte Funktion je nach Kategorisierungsstufe unterschiedliche Teilfunktionen umfasst.

4. Verfahren nach Anspruch 3,
**dadurch gekennzeichnet, dass**
in einer ersten Kategorisierungsstufe, welche insbesondere für eine erstmals erfasste Umgebung des Kraftwagens gewählt wird, die automatisierte Funktion als Teilfunktion zumindest eine ohne das Erlernen nutzbare Funktion der Fahrerassistenzeinrichtung umfasst, insbesondere ein Warnen des Fahrers basierend auf einem aktuellen Erfassen der Umgebung.

5. Verfahren nach einem der Ansprüche 3 oder 4,
**dadurch gekennzeichnet, dass**
in einer zweiten Kategorisierungsstufe, welche insbesondere für eine zuvor zumindest einmal erfasste Umgebung des Kraftwagens bei vorgegebenen ersten Werten des Gütemaßes gewählt wird, die automatisierte Funktion als Teilfunktion zumindest eine umgebungsspezifische Empfehlung an den Fahrer ausgibt, insbesondere ein Lenkmoment und/oder ein Empfehlen eines Lenkwinkels und/oder ein Empfehlen einer Gasstellung und/oder ein Empfehlen einer Kupplungsstellung und/oder ein Empfehlen einer Gangwahl.

6. Verfahren nach einem der Ansprüche 3 bis 5,
**dadurch gekennzeichnet, dass**
in einer dritten Kategorisierungsstufe, welche insbesondere für eine zuvor zumindest einmal erfasste Umgebung des Kraftwagens bei vorgegebenen zweiten Werten des Gütemaßes gewählt wird, die automatisierte Funktion als Teilfunktion zumindest ein teilautonomes Führen des Kraftwagens durch die Fahrerassistenzeinrichtung unter unmittelbarer Überwachung des Fahrers umfasst, insbesondere ein teilautonomes Querführen und/oder ein teilautonomes Längsführen des Kraftwagens durch die Fahrerassistenzeinrichtung.

7. Verfahren nach einem der Ansprüche 3 bis 6,
**dadurch gekennzeichnet, dass**
in einer vierten Kategorisierungsstufe, welche insbesondere für eine zuvor zumindest einmal erfasste Umgebung des Kraftwagens bei vorgegebenen dritten Werten des Gütemaßes gewählt wird, die automatisierte Funktion als Teilfunktion zumindest ein autonomes Führen des Kraftwagens durch die Fahrerassistenzeinrichtung ohne unmittelbare Überwachung des Fahrers umfasst, insbesondere ein autonomes Querführen und/oder ein autonomes Längsführen des Kraftwagens durch die Fahrerassistenzeinrichtung oder ein autonomes Ein- und/oder Ausparken.

8. Fahrerassistenzeinrichtung für einen Kraftwagen, mit:
- einer Sensoreinrichtung zum Erfassen einer Umgebung des Kraftwagens;
- einer weiteren Sensoreinrichtung zum Erfassen zumindest einer Handlung eines Fahrers des Kraftwagens, welche mit einer Fahrbewegung des Kraftwagens in Zusammenhang steht;
**gekennzeichnet durch** eine
- Lerneinheit zum Erlernen einer Korrelation zwischen der erfassten Umgebung und der erfassten Handlung über ein wiederholtes Erfassen von der Umgebung und der Handlung,
wobei mittels einer Bewertungseinrichtung der Fahrerassistenzeinrichtung eine Verlässlichkeit der erlernten Korrelation mittels eines Gütemaßes bewertbar ist, wobei mittels der Fahrerassistenzeinrichtung zumindest eine automatisierte Funktion, welche mit einer Fahrbewegung des Kraftwagens in Zusammenhang steht, in Abhängigkeit der augenblicklichen Umgebung des Kraftwagens und/oder eines Wertes des Gütemaßes durchführbar ist, **dadurch gekennzeichnet, dass** die Fahrerassistenzeinrichtung ausgelegt ist, eine Einparkhandlung zu erfassen.

## Claims

1. Method for operating a driver assistance device of a motor vehicle, comprising the steps of:
- detection of an area surrounding the motor vehicle by a sensor device of the motor vehicle, which sensor device is associated with the driver assistance device;
- detection of at least one action by a driver of the motor vehicle, which action is related to a driving movement of the motor vehicle, by a further sensor device of the motor vehicle, which further sensor device is associated with the driver assistance device;
- learning of a correlation between the detected surrounding area and the detected action by the driver assistance device by means of repeated detection of the surrounding area and the action;
- evaluation of a degree of reliability of the learnt correlation by means of a quality measure by the driver assistance device;
- implementation of at least one automated function, which is related to a driving movement of the motor vehicle, by the driver assistance device depending on the current area surrounding the motor vehicle and/or a value of the quality measure, **characterized by** detecting a parking action by the driver.

2. Method according to Claim 1,
**characterized in that**
a frequency of the detection of the surrounding area and the action and/or a degree of up-to-dateness of the detection of the surrounding area and of the action is taken into account by the quality measure, and a greater frequency and/or a greater degree of up-to-dateness corresponds to a quality measure which represents a greater degree of reliability.

3. Method according to either of the preceding claims, **characterized in that**
for the purpose of implementing the automated function, categorization of the current area surrounding the motor vehicle and/or of the quality measure of the learnt correlation is performed, specifically into discrete categorization stages, and the automated function comprises different subfunctions depending on the categorization stage.

4. Method according to Claim 3,
**characterized in that**
in a first categorization stage which is selected, in particular, for an area surrounding the motor vehicle which is detected for the first time, the automated function, as subfunction, comprises at least one function of the driver assistance device which can be used without learning, in particular warning the driver based on a current detection of the surrounding area.

5. Method according to either of Claims 3 and 4,
**characterized in that**
in a second categorization stage which is selected, in particular, for an area surrounding the motor vehicle which has been detected at least once before with prespecified first values of the quality measure, the automated function, as subfunction, outputs at least one surrounding area-specific recommendation to the driver, in particular a steering torque and/or a recommendation of a steering angle and/or a recommendation of a throttle position and/or a recommendation of a clutch position and/or a recommendation of a gear selection.

6. Method according to any of Claims 3 to 5,
**characterized in that**
in a third categorization stage which is selected, in particular, for an area surrounding the motor vehicle which has been detected at least once before with prespecified second values of the quality measure, the automated function, as subfunction, comprises at least one partially autonomous control operation of the motor vehicle by the driver assistance device with direct monitoring by the driver, in particular a partially autonomous lateral control operation and/or a partially autonomous longitudinal control operation of the motor vehicle by the driver assistance device.

7. Method according to any of Claims 3 to 6,
**characterized in that**
in a fourth categorization stage which is selected, in particular, for an area surrounding the motor vehicle which has been detected at least once before with prespecified third values of the quality measure, the automated function, as subfunction, comprises at least one autonomous control operation of the motor vehicle by the driver assistance device without direct monitoring by the driver, in particular an autonomous lateral control operation and/or an autonomous longitudinal control operation of the motor vehicle by the driver assistance device or an autonomous operation for driving into and/or out of a parking space.

8. Driver assistance device for a motor vehicle, comprising:
- a sensor device for detecting an area surrounding the motor vehicle;
- a further sensor device for detecting at least one action by a driver of the motor vehicle, which action is related to a driving movement of the motor vehicle; **characterized by** a
- learning unit for learning a correlation between the detected surrounding area and the detected action by means of repeated detection of the surrounding area and the action,
wherein a degree of reliability of the learnt correlation by means of a quality measure can be evaluated by means of an evaluation device of the driver assistance device, wherein at least one automated function, which is related to a driving movement of the motor vehicle, can be implemented by means of the driver assistance device depending on the current area surrounding the motor vehicle and/or a value of the quality measure, **characterized in that** the driver assistance device is designed to detect a parking action.

## Revendications

1. Procédé pour faire fonctionner un dispositif d'assistance à la conduite d'un véhicule automobile, comprenant les étapes suivantes :
- détection d'un environnement du véhicule automobile par un dispositif de détection du véhicule automobile appartenant au dispositif d'assistance à la conduite ;
- détection d'au moins une action d'un conducteur du véhicule automobile, laquelle est en rapport avec un mouvement de déplacement du véhicule automobile, par un dispositif de détection supplémentaire du véhicule automobile appartenant au dispositif d'assistance à la conduite ;
- apprentissage d'une corrélation entre l'environnement détecté et l'action détectée par le dispositif d'assistance à la conduite par le biais d'une détection répétée de l'environnement et de l'action ;
- évaluation d'une fiabilité de la corrélation apprise au moyen d'une mesure de qualité par le dispositif d'assistance à la conduite ;
- exécution d'au moins une fonction automatisée, laquelle est en rapport avec un mouvement de déplacement du véhicule automobile, par le dispositif d'assistance à la conduite en fonction de l'environnement instantané du véhicule automobile et/ou d'une valeur de la mesure de qualité, **caractérisé par** la détection d'une action d'entrée en stationnement du conducteur.

2. Procédé selon la revendication 1,
**caractérisé en ce que**
une fréquence de la détection de l'environnement et de l'action et/ou une actualité de la détection de l'environnement et de l'action sont prises en compte par la mesure de qualité et une fréquence plus grande et/ou une actualité plus grande correspondent à une mesure de qualité qui représente une plus grande fiabilité.

3. Procédé selon l'une quelconque des revendications précédentes,
**caractérisé en ce que**
pour l'exécution de la fonction automatisée, une catégorisation de l'environnement instantané du véhicule automobile et/ou de la mesure de qualité de la corrélation apprise est effectuée, et ce en niveaux de catégorisation discrets, et la fonction automatisée comprend différentes fonctions partielles selon le niveau de catégorisation.

4. Procédé selon la revendication 3,
**caractérisé en ce que**
dans un premier niveau de catégorisation, lequel est notamment choisi pour un environnement du véhicule automobile détecté pour la première fois, la fonction automatisée comprend, en tant que fonction partielle, au moins une fonction du dispositif d'assistance à la conduite utilisable sans apprentissage, notamment un avertissement du conducteur basé sur une détection actuelle de l'environnement.

5. Procédé selon l'une des revendications 3 ou 4,
**caractérisé en ce que**
dans un deuxième niveau de catégorisation, lequel est notamment choisi pour un environnement du véhicule automobile détecté au moins une fois précédemment avec des premières valeurs prédéfinies de la mesure de qualité, la fonction automatisée délivre au conducteur, en tant que fonction partielle, au moins une recommandation spécifique à l'environnement, notamment un couple de direction et/ou une recommandation d'un angle de braquage et/ou une recommandation d'une position d'accélération et/ou une recommandation d'une position d'embrayage et/ou une recommandation d'une sélection de rapport.

6. Procédé selon l'une des revendications 3 à 5,
**caractérisé en ce que**
dans un troisième niveau de catégorisation, lequel est notamment choisi pour un environnement du véhicule détecté au moins une fois précédemment avec des deuxièmes valeurs prédéfinies de la mesure de qualité, la fonction automatisée comprend, en tant que fonction partielle, au moins un guidage semi-autonome du véhicule automobile par le dispositif d'assistance à la conduite sous surveillance directe du conducteur, notamment un guidage transversal partiellement autonome et/ou un guidage longitudinal partiellement autonome du véhicule automobile par le dispositif d'assistance à la conduite.

7. Procédé selon l'une des revendications 3 à 6,
**caractérisé en ce que**
dans un quatrième niveau de catégorisation, lequel est notamment choisi pour un environnement du véhicule détecté au moins une fois précédemment avec des troisièmes valeurs prédéfinies de la mesure de qualité, la fonction automatisée comprend, en tant que fonction partielle, au moins un guidage autonome du véhicule automobile par le dispositif d'assistance à la conduite sans surveillance directe du conducteur, notamment un guidage transversal autonome et/ou un guidage longitudinal autonome du véhicule automobile par le dispositif d'assistance à la conduite ou une entrée en/sortie de stationnement autonome.

8. Dispositif d'assistance à la conduite pour un véhicule automobile, comprenant :
- un dispositif de détection destiné à détecter un environnement du véhicule automobile ;
- un dispositif de détection supplémentaire destiné à détecter au moins une action d'un conducteur du véhicule automobile, laquelle est en rapport avec un mouvement de déplacement du véhicule automobile ;
**caractérisé par** une
- unité d'apprentissage destinée à l'apprentissage d'une corrélation entre l'environnement détecté et l'action détectée par le biais d'une détection répétée de l'environnement et de l'action ;
une fiabilité de la corrélation apprise pouvant être évaluée au moyen d'une mesure de qualité au moyen d'un dispositif d'évaluation du dispositif d'assistance à la conduite, au moins une fonction automatisée, laquelle est en rapport avec un mouvement de déplacement du véhicule automobile, pouvant être exécutée au moyen du dispositif d'assistance à la conduite en fonction de l'environnement instantané du véhicule automobile et/ou d'une valeur de la mesure de qualité, **caractérisé en ce que** le dispositif d'assistance à la conduite est conçu pour détecter une action d'entrée en stationnement.
